# EUROPEAN PATENT APPLICATION

(11) **EP 1 672 489 A2**
(43) Date of publication of application: **21.06.2006**
(21) Application number: 05111510.3
(22) Date of filing: 30.11.2005
(51) Int. Cl.: G06F 9/445, G06F 9/44

(54) **Language-Neutral And Language-Specific Installation Packages For Software Setup**

(30) Priority: 20.12.2004 US 19082
(71) Applicant: MICROSOFT CORPORATION, Redmond, Washington 98052-6399 (US)
(72) Inventor: Bennett, James A., 98052, Redmond (US); Cheff-Goldade, Terri V., 98052, Redmond (US); Barr, Paul C., 98052, Redmond (US); Hughes, Aidan T., 98052, Redmond (US); Kurtzeborn, Scott E., 98052, Redmond (US); James, Jeffrey M., 98052, Redmond (US)
(74) Representative: Zimmer, Franz-Josef

(57) **Abstract**

A first installation package for a first group of files is created for a program. The first group of files include language-neutral files for the program but no language-specific files for the program. A second installation package for a second group of files is also created for the program. The second group of files includes language-specific files for the program.

## Description

### TECHNICAL FIELD

This invention relates to software programs and distribution of software programs, and particularly to language-neutral and language-specific installation packages for software setup.

### BACKGROUND

Many companies have offices located in various locations throughout the world. As a result, the employees of the company speak a wide range of languages. This situation creates various requirements for computers used by the company, typically requiring the computers to present a user interface in a variety of different languages. For example, in the United States or England a user interface for a word processing program in English may be displayed, while in France a user interface for the same word processing program in French may be displayed.

This situation can be problematic for software developers because they need to support this wide range of user interfaces across a wide range of products. For example, a software developer may design and market a word processing program, a spreadsheet program, a database program, a messaging and collaboration program, a drawing program, a presentation program, as well as multiple program suites including various combinations of these programs. Given the number of different programs, as well as combinations of these programs that may be offered in different suites, and the number of different languages spoken throughout the world, a very large number of different versions of software products can result, each customized to a particular language and combination of one or more applications. This results in a very large number of software products that would need to be created and tested by the software developer. This number increases dramatically when the software programs allow multiple languages to be installed on the same target computer (e.g., for a user that desires to use both French- and English-language versions of the program), creating an even larger number of software products that would need to be created and tested by the software developer.

One solution to this problem is to select one language as a base language, such as English, and always install that base language first. The various other languages are installed afterwards, overwriting or appending to the appropriate parts of the base language version as appropriate. This reduces the number of software products that would need to be created and tested by the software developer. Thus, if a user desires to install a French version of a suite of applications, he or she first installs the English-language version of the suite of applications, then the French-language version is installed over the English-language version. This can result in the French-language version replacing (overwriting) the English-language version, or the French-language version coexisting with (being appended to) the English-language version. This solution, however, can be troublesome because the installation of one language over another language can result in artifacts in the resultant product where some of the base-language interface occasionally is displayed rather than the overwriting language. These artifacts can also vary based on the order in which versions are installed. For example, if English were the base language and a French-language version were installed over the English-language version, and then a German-language version were installed over the English- and French-language versions, then the artifacts could end up being different than if the German-language version had been installed over the English-language version and then the French-language version installed over the English- and German-language versions.

Additional problems arise when software patches are made available for software programs. These software patches typically provide additional functionality or features, and/or correct problems or errors found in the software program. Typically, a different software patch is required for each possible combination of applications and languages that a customer may be using, resulting in the software developer distributing a single software patch that includes the proper instructions for the patch for each of these numerous possible combinations, which can result in a very large software patch being distributed. Another possibility is for the software developer to distribute individual software patches, each targeting a particular one of the numerous possible combinations, and requiring the end users to figure out which patch they need. This can result in additional effort and/or knowledge being required on the part of the end user in selecting the proper one of the large number of individual patches.

### SUMMARY

Language-neutral and language-specific installation packages for software setup are described herein.

In accordance with certain aspects, a first installation package for a first group of files is created for a program. The first group of files include language-neutral files for the program but no language-specific files for the program. A second installation package for a second group of files is also created for the program. The second group of files includes language-specific files for the program.

In accordance with additional aspects, the first and second installation packages can also be stored one or more distribution media for subsequent installation on target computers. Additional installation packages for additional groups of language-specific files can also be created and stored on one or more distribution media.

### BRIEF DESCRIPTION OF THE DRAWINGS

The same numbers are used throughout the document to reference like components and/or features.

Fig. 1 is a block diagram illustrating an example of generation of distribution media.

Fig. 2 is a block diagram illustrating an example environment in which the language-neutral and language-specific installation packages for software setup described herein can be used.

Fig. 3 is a flowchart illustrating an example process for creating distribution media having language-neutral and language-specific packages.

Fig. 4 is a block diagram illustrating reusing of installation packages.

Fig. 5 illustrates an example of installation packages stored on a distribution medium.

Fig. 6 illustrates a general computer environment in which the language-neutral and language-specific installation packages for software setup described herein can be used.

### DETAILED DESCRIPTION

Language-neutral and language-specific installation packages for software setup are discussed herein. These packages associate global files for a software program with a separate installation packet(s) from the localized files for the software program. The global files are language-neutral files, while the localized files are files specific to a particular language. Installation packages are generated for the global files as well as the localized files for different languages. Distribution media can then be generated to include the global files installation package as well as one or more of the localized files installation packages.

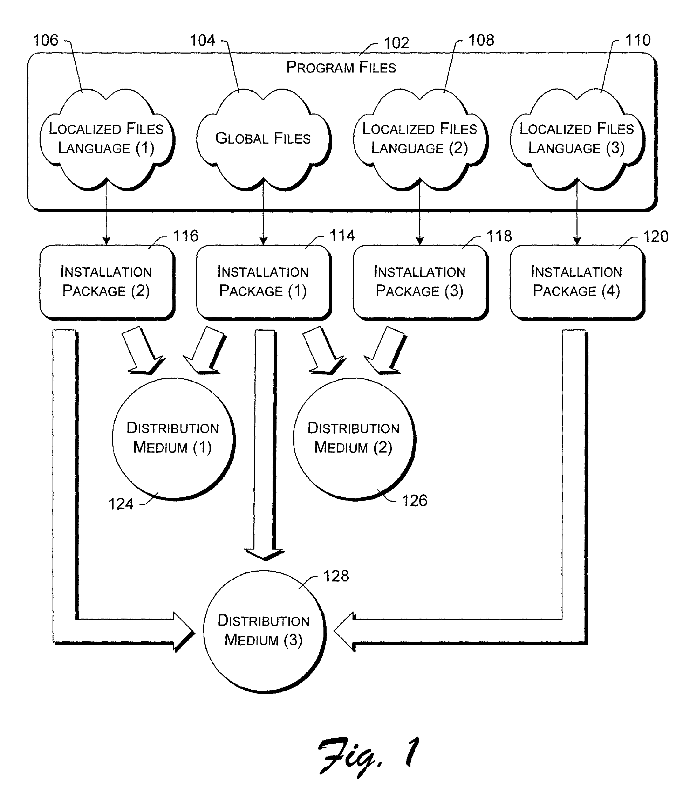

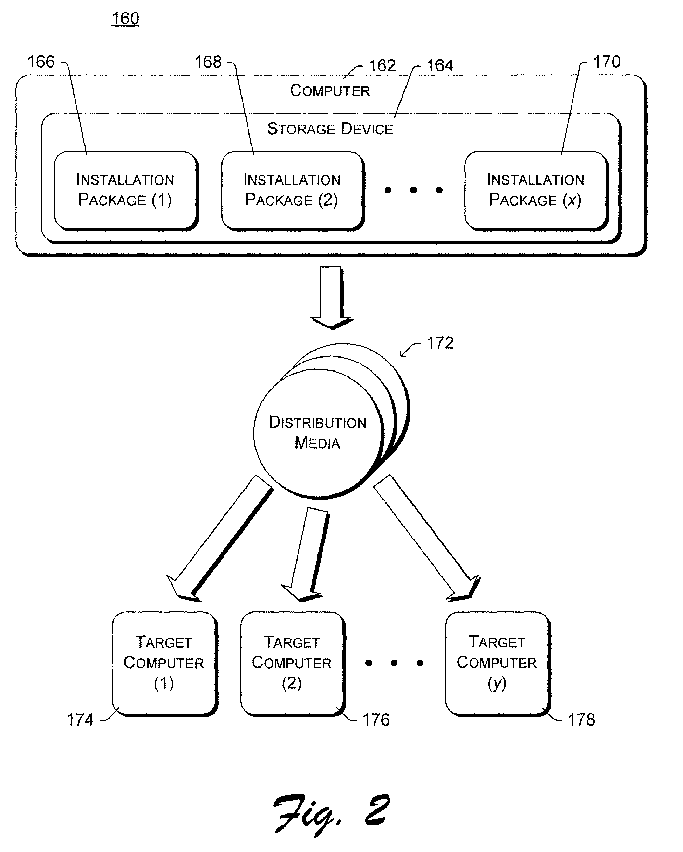

Fig. 1 is a block diagram illustrating an example of generation of distribution media. The distribution media store installation packages for setting up a program (also referred to as installing a program) onto a target computer(s). The program can be any of a variety of different programs, such as a productivity program (e.g., a word processing program, a spreadsheet program, a database program, a drawing program, etc.), a reference program (e.g., a dictionary program, an encyclopedia program, etc.), an educational program, a game or other recreational program, and so forth. As discussed in more detail below, the program can be localized to a variety of different languages such as English, French, German, Spanish, Japanese, Chinese, Turkish, and so forth.

The program files 102 for a software program or application are grouped into a collection of one or more global files 104, a collection of one or more localized files for a first language 106, a collection of one or more localized files for a second language 108, and a collection of one or more localized files for a third language 110. It is to be appreciated that, although three collections of localized files are illustrated in Fig. 1, additional collections of localized files may be included in program files 102 in order to support additional languages. Furthermore, fewer collections of localized files may be included in program files 102 if fewer than three languages are desired.

It is also to be appreciated that, although program files 102 for a single program are illustrated in Fig. 1, similar collections of program files grouped into global files and different localized files for different languages can be included for additional programs. Additionally, the program files for multiple different programs may be grouped together as a program suite. For example, all of the global files for several different programs that are part of the same suite of programs can be grouped together into a single collection of files.

Global files 104 are language-neutral files for the program. The language-neutral files typically include executable binary files or files of instructions that can be compiled and executed in order to run the program. The language-neutral files may also include configuration data used by the program when running. The language-neutral files are the same regardless of which language version of the program is running. For example, the language-neutral files are the same for English versions of the program, French versions of the program, Japanese versions of the program, and so forth.

Each of the localized files 106, 108, and 110, on the other hand, include language-specific files that are localized to a particular language. For example, localized files 106 may be English-language files, while localized files 108 may be Japanese-language files, and localized files 110 may be French-language files. The localized files are those files for the program that vary based on which language version of the program is to be run, allowing the user of the program to interact with the program in the language of their choice. The localized files can include, for example, help files that include data for help information that is displayed to a user of the program. The localized files can also include, for example, configuration files that identify user interface display elements such as toolbars, menus, dialog boxes, display icons, and so forth. The localized files can further include, for example, templates and sample documents to be used with the program.

A corresponding separate installation package 114, 116, 118, and 120 is created for each of the collections of files 104, 106, 108, and 110, respectively. Installation package 114 corresponds to global files 104, installation package 116 corresponds to localized files 106, installation package 118 corresponds to localized files 108, and installation package 120 corresponds to localized files 110. Each installation package 114, 116, 118, and 120 includes instructions about how its corresponding files are to be installed on a target computer so that the program runs properly on the target computer. These instructions are accessed and carried out by an application installer at the target computer where the program is being installed.

The installation packages can be designed so that all of the information that the application installer needs to install the program, except for user-supplied configuration information, is included in the installation packages. Alternatively, some of the information that the application installer needs to install the program may be included in a file(s) that is external to, but associated with, the installation packages. An indication of where the particular file(s) associated with a particular installation package can be obtained may be included in the particular installation package, or alternatively the particular file(s) may be stored in a location following a particular convention or technique that is known to the application installer at the target computer.

A variety of different types of instructions can be included in the installation packages 114, 116, 118, and 120. For example, the installation packages can include instructions indicating in which directories or folders of the target computer particular ones of the corresponding files are to be stored during installation. By way of another example, the installation packages can include instructions indicating shorteuts that are to be created on the target computer. By way of yet another example, the installation packages can include instructions regarding a licensing agreement(s) that is to be presented to, and accepted by, the user in order to install the program. By way of still another example, the files for the program may be compressed, and the installation packages can include instructions indicating which files are compressed and how to decompress them. By way of a further example, various configuration information may need to be supplied to the application installer during the installation process, and what configuration information may be needed can be identified in the installation packages. This configuration information can be, for example, an indication of what directory or folder on the target computer the program should be installed to, an indication of which of multiple components of the program should be installed, user-registration information (such as name, address, phone number, email address, etc.), and so forth. Prompts for what information is needed may be presented to the user and the user can manually enter his or her selections. Alternatively, a script file may be generated by the user (such as a system administrator) that automatically provides the information to the application installer.

Each of the installation packages 114, 116, 118, and 120 can also include its corresponding collection of files 104, 106, 108, and 110. In some instances, the files are compressed prior to being included in the installation package, and then decompressed as part of the installation process. Any of a variety of compression algorithms can be used for compressing the files. Typically a lossless compression algorithm(s) is used in compressing the files, although a lossy compression algorithm(s) may alternatively be used in some situations (such as when an image or other video data is being compressed). An indication of how to decompress the files, such as which decompression algorithm to use, can be included in the corresponding installation package or alternatively may be known by the application installer at the target computer.

Alternatively, rather than including the corresponding collections of files in the installation packages 114, 116, 118, and 120, the corresponding collections of files may be stored separately from the installation packages. For example, each installation package may be stored as one file while each corresponding collection of files may be stored as a separate file. If the collections of files are stored separately from the installation packages, the collections of files are still associated with the installation packages. An indication of where the files can be obtained can be included in the installation packages, or alternatively the files may be stored in a location following a particular convention or technique that is known to the application installer at the target computer. For example, the collection of files may be compressed and stored as a single file in a same directory as the installation package.

Additional meta data can also be included in the installation package. This meta data can describe, for example, the program being installed, the files being installed, the installation package itself, and so forth. Alternatively, rather than being included in the installation package, such meta data may be stored separately yet accessible to the application installer analogous to the collections of files discussed above. Also analogous to the collections of files discussed above, the meta data may optionally be compressed, with either the installation package or the application installer at the target computer knowing how to decompress the compressed meta data.

One specific example of installation packages that are oftentimes used for programs being installed under a Microsoft® Windows® operating system are referred to as a ".msi" or "MSI" file. The instructions about how the corresponding program files are to be installed are included in a .msi file. The collections of files are compressed and included in a file referred to as a ".cab" or "CAB" file. One or more XML (extensible Markup Language) files may also be included, each storing meta data for the installation package.

The installation packages 114, 116, 118, and 120 can then be stored on one or more distribution media 124, 126, and 128. Different combinations of installation packages 114, 116, 118, and 120 can be stored on different distribution media, resulting in different distribution media having files localized for different languages. However, each of these different combinations will include the same installation package 114 with the language-neutral files 104.

Distribution medium 124 includes installation packages 114 and 116, so the program distributed on distribution medium 124 is localized to the language of localized files 106. Distribution medium 126 includes installation packages 114 and 118, so the program distributed on distribution medium 126 is localized to the language of localized files 108. Distribution medium 128 includes installation packages 114, 116, and 120, so the program distributed on distribution medium 126 is localized to the languages of localized files 106 and 110.

Three distribution media are illustrated in Fig. 1. It is to be appreciated that four or more distribution media localized for four or more different languages or language combinations may be created. Similarly, it is to be appreciated that only one or two distribution media localized for only one or two different languages or language combinations may be created.

It is also to be appreciated that multiple copies of the same distribution medium will typically be made. For example, if localized files 106 are localized to the English language, then distribution medium 124 storing the program customized to the English language may have tens or hundreds of thousands of copies made and distributed.

A variety of different types of media can be used as distribution media 124, 126, and 128. The distribution media can be any type of computer readable media, such as optical discs (e.g., CDs or DVDs), removable magnetic disks (e.g., floppy disks or Iomega® Zip® disks), other magnetic disks (e.g., hard disks in a computer or server), solid state memory (e.g., Compact Flash cards, portable USB Flash memory devices, Secure Digital (SD) cards, etc.), and so forth. The distribution media may be located locally at the same system as the installation packages, or alternatively may be located remotely from the system where the installation packages are stored. For example, the distribution media may be located at a server or other computer accessed over a network. Additionally, the same combination of installation packages may be placed on multiple different types of media. For example, installation packages 114 and 118 may both be placed on CDs, DVDs, as well as magnetic disks.

In certain situations, depending on the storage capacity of the distribution media and the size of the installation packages, the installation packages for a single program may need to be spread across multiple distribution media. For example, the global installation package and English-language localized installation package may be large enough that they require two CDs for storage, or alternatively just one DVD.

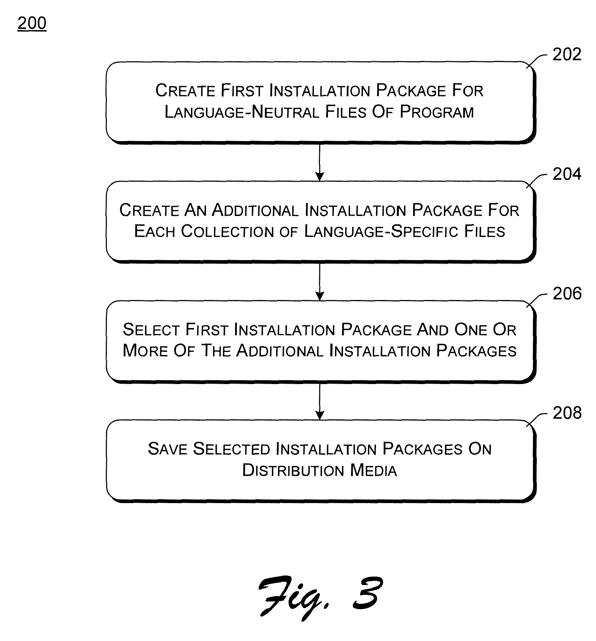

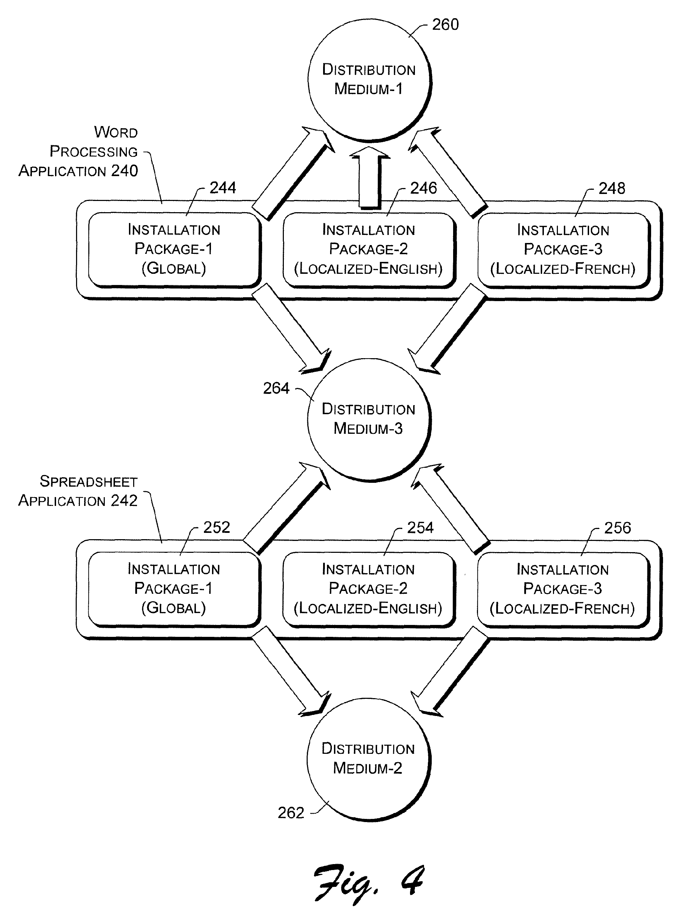

Fig. 2 is a block diagram illustrating an example environment 160 in which the language-neutral and language-specific installation packages for software setup described herein can be used. Environment 160 includes a computer 162 having a storage device 164. The storage device 164 includes multiple (x) installation packages 166, 168, and 170 for a software program. One of the installation packages 166, 168, and 170 will include or otherwise have associated with it the global files for the software program, while the remaining installation packages 166, 168, and 170 will include or otherwise have associated with them localized files for particular languages for the software program. Although all of the installation packages 166, 168, and 170 are illustrated in Fig. 2 as being stored on the same storage device 164 that is part of computer 162, alternatively one or more of the installation packages 166, 168, and 170 (including possibly all of the installation packages 166, 168, and 170) may be stored on a different storage device that is part of computer 162 or separate from computer 162, such as a storage device on a server computer coupled to computer 162 via a network.

Various combinations of installation packages 166, 168, and 170 can be stored on multiple distribution media 172. Each of the distribution media 172 will have stored thereon the installation package that includes or has associated with it the global files for the software program, and at least one other installation package that includes or has associated with it localized files for a particular language for the software program. The distribution media 172 typically includes multiple copies having the same combination of installation packages.

The distribution media 172 are then made available to multiple (y) target computers 174, 176, and 178. Different ones of target computers 174, 176, and 178 can use different distribution media 172, or alternatively two or more of target computers 174, 176, and 178 may share a single distribution media. An application installer on each of the target computers 174, 176, and 178 runs in order to install the software program from the installation packages on distribution media 172.

It should be noted that different installation packages may be obtained by a target computer 174, 176, or 178 from multiple different distribution media 172. For example, the language-neutral files and the localized files for the English-language version of a software program may be obtained by purchasing a CD with the corresponding installation packages stored thereon, while the localized files for the Spanish-language version of that software program may be obtained by purchasing a different CD or by downloading the installation package corresponding to the Spanish-language files from a server on the Internet (or some other network).

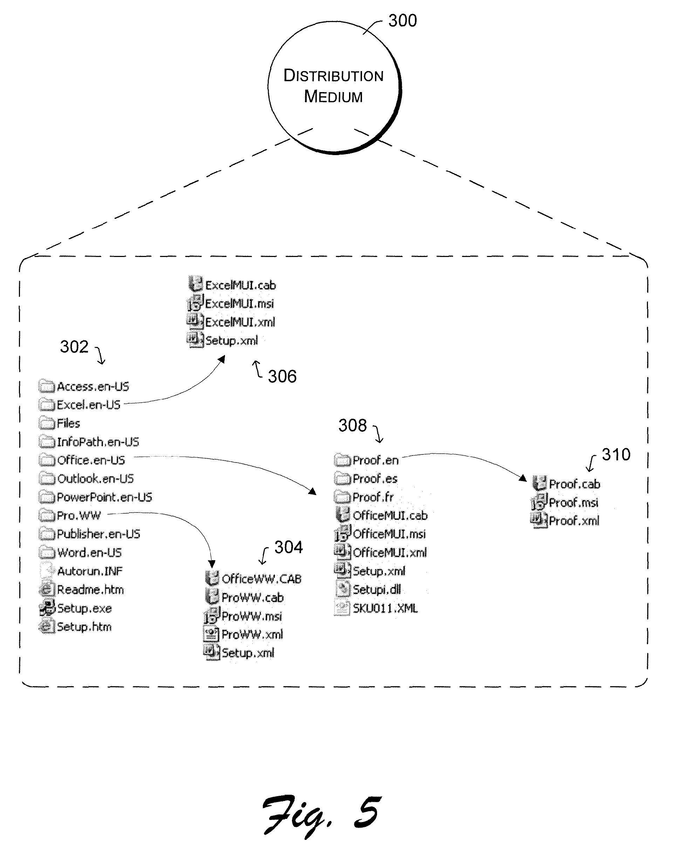

Fig. 3 is a flowchart illustrating an example process 200 for creating distribution media having language-neutral and language-specific packages. Process 200 is performed, for example, by a computer such as computer 162 of Fig. 2. Process 200 can be implemented in software, firmware, hardware, or combinations thereof.

Initially, a first installation package for the collection of language-neutral files of the software program is created (act 202). Additionally, for each language that is supported by the software program, an additional installation package for the collection of language-specific files for that language is created (act 204). As discussed above, the installation packages can include, for example, instructions about how the corresponding program files are to be installed, the corresponding collection of files, and meta data.

The particular files in each collection of files can be identified in different manners. Typically, software program designers design their programs as multiple different components that operate together to perform the desired functionality of the program. These components include, for example, binary files or other sets of executable instructions, libraries (such as dynamic-link libraries (DLLs)), configuration data, and so forth. Software program designers typically design different components to include different support for the different languages that they intend to support. For example, the data to support help functionality for the program in the English language would be one component, the data to support help functionality for the program in the French language would be another component, the data to support help functionality for the program in the Japanese language would be another component, and so forth.

The particular files that are part of each collection of files can be based on these different components of the software program. For example, the designer of the software program can identify which components should be included in which collection of files, such as by generating a list of particular components and which collection of files each belongs to. By way of another example, the designer of the software program can use a particular naming convention, such as different file name extensions for the language-neutral files as well as each of the different languages for the localized files. By way of yet another example, the designer of the software program can store the language-neutral files as well as the localized files for each different language in a different location, such as a different directory or folder. The directory or folder names themselves, or alternatively some other listing, can indicate which directory or folder stores files for which collection of files.

The first installation package and one or more of the additional installation packages are then selected (act 206). Which one or more of the additional installation packages are selected varies based on the desired language support for the distribution media being created. A user selection may be received that identifies which language is to be supported, or alternatively the selection may be automated. For example, process 200 may repeat act 206 multiple times and select a different one or more of the additional language installation packages each time.

The installation packages selected in act 206, as well as any file associated with the installation packages (such as the corresponding collections of files), are then saved on one or more distribution media (act 208). As discussed above, the distribution media can be any of a variety of computer readable media. Process 200 can optionally repeat acts 206 and 208 multiple times in order to generate different distribution media having different installation packages stored thereon.

It should be noted that process 200 includes no requirement that the same localized language be included on all distribution media. The particular language(s) included on different distribution media can vary - there is no base language common across all distribution media that needs to be installed first on the target computers over which other localized files need to be installed. Rather, any one or combination of the additional installation packages can be included on the distribution media.

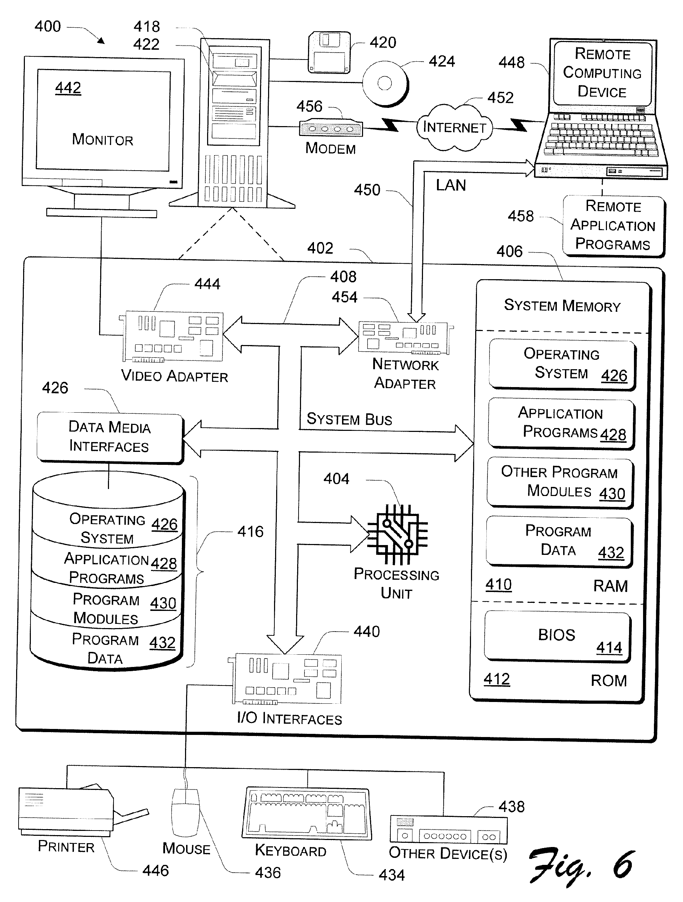

Additionally, it should be noted that the same installation packages associated with each software program can be used to create different distribution media having different collections of the software programs. Fig. 4 is a block diagram illustrating reusing of installation packages.

In Fig. 4, a word processing software application 240 and a spreadsheet software application 242 are illustrated. Three installation packages have previously been created for word processing application 240: installation package 244 corresponding to the language-neutral files for application 240, installation package 246 corresponding to the English-language localized files for application 240, and installation package 248 corresponding to the French-language localized files for application 240. Three installation packages have also previously been created for the spreadsheet application 242: installation package 252 corresponding to the language-neutral files for application 242, installation package 254 corresponding to the English-language localized files for application 242, and installation package 256 corresponding to the French-language localized files for application 242.

A first distribution medium 260 can be created that includes installation packages 244, 246, and 248. Distribution medium 260 can thus be used to install the word processing application in the English and/or French languages. A second distribution medium 262 can be created that includes installation packages 252 and 256. Distribution medium 262 can thus be used to install the spreadsheet application in the French language. A third distribution medium 264 can also be created that includes installation packages 244, 248, 252, and 256. Distribution medium 264 can thus be used to install a suite of applications that includes both the word processing application and the spreadsheet application in the French language.

Although Fig. 4 illustrates an example of reusing installation packages for two applications, it is to be appreciated that additional distribution media including installation packages for three or more applications can also be created.

Alternatively, rather than having two separate language-neutral global installation packages 244 and 252 for the two applications, the corresponding files may be collected together and be part of the same installation package.

It should be noted that the language-neutral and language-specific installation packages discussed herein can result in a reduction in the size of software patches that may be sent to users. Such patches are instructions that are executed at the target computers where applications are installed in order to, for example, add new features to the applications, correct issues or problems discovered in the application, and so forth. For example, assume that a patch is to be made available to users of word processing application 240 in order to correct a problem discovered in one of the global files of application 240. The patch would include a single set of instructions, and possibly data associated with those instructions, that are executed in order to correct the problem. This same patch can be used for all versions of word processing application 240, regardless of whether they are stand-alone versions of application 240 or versions that are part of a larger suite of applications. Furthermore, this same patch can be used for word processing application 240 regardless of which language a particular copy of application 240 is localized to. All of the different localized versions of application 240 rely on the same language-neutral files associated with installation package 244.

Fig. 5 illustrates an example of installation packages stored on a distribution medium. Distribution medium 300 stores installation packages for installing the Microsoft® Office suite of applications. A first folder, typically the root folder or directory of distribution medium 300, includes a first set of folders and files 302. An "Autorun.INF" file includes instructions so that distribution medium 300 can automatically run an installer application, which is the "Setup.exe" program, to begin the installation process when distribution medium 300 is inserted into a drive or otherwise coupled to a computer. Additional files in the set 302 include files to support the "Setup.exe" program and that can be used during the installation process.

In the example illustrated in Fig. 5, the example version of the Microsoft® Office suite of applications includes Microsoft® Access, Microsoft® Excel, the Microsoft® Outlook® messaging and collaboration client, the Microsoft® PowerPoint® presentation graphics program, Microsoft® Publisher, and Microsoft® Word.

In the example illustrated in Fig. 5, rather than having a separate installation package for each collection of language-neutral files for each application that is part of the Microsoft® Office suite of applications, a single installation package is included for all of the applications in the Microsoft® Office suite of applications (except for proofing tools, as discussed in more detail below). A "Pro.WW" folder, expanded as folder 304 to illustrate its contents, includes the language-neutral global files for each of the applications in this version of Microsoft® Office. In folder 304, a file "ProWW.msi" is the installation package, files "ProWW.cab" and "OfficeWW.CAB" are the corresponding collection of language-neutral files (in a compressed form), and the "setup.xml" and "ProWW.xml" files store meta data for installing Microsoft® Office.

A different folder is included in the set 302 for localizing each of the different applications included in this version of the Microsoft® Office suite of applications to the English language. These folders are indicated by inclusion of the ".en-US" extension. Thus, in this example, even though the language-neutral files are part of a single installation package, the language-specific localization files are separate installation packages. Alternatively, two or more of the language-specific localization files could have been included in a single installation package.

One of these folders, the "Excel.en-US" folder is expanded as folder 306 to illustrate its contents. In folder 306, a file "ExcelMUI.msi" is the installation package for the English-language localization for Microsoft® Excel, a file "ExcelMUI.cab" is the corresponding collection of language-specific files (in a compressed form), and the "setup.xml" and "ExcelMUI.xml" files store meta data for installing the language-specific files for Microsoft® Excel.

Another of these folders, the "Office.en-US" folder is expanded as folder 308 to illustrate its contents. Folder 308 includes the installation packet for proofing tools for the Microsoft® Office suite of applications, such as a spellchecker, grammar-checker, hyphenator, thesaurus, and so on. In the illustrated example, the various proofing tools are included as part of, or associated with, the same installation packet. Alternatively, the different proofing tools could be included as part of, or associated with, different installation packets. In this version of Microsoft® Office, proofing tools for the English, Spanish, and French languages are included. The file "OfficeMUI.msi" is the installation package for these proofing tools, and the language-specific localization files for each of the English, Spanish, and French languages are included as separate sub-folders of folder 308 ("Proof.en" for the English-language files, "Proof.es" for the Spanish-language files, and "Proof.fr" for the French-language files). A file "OfficeMUI.cab" is the corresponding collection of language-neutral files for the proofing tools, and the "setup.xml" and "OfficeMUI.xml" files store meta data for installing the proofing tools.

The "Proof.en" folder is expanded as folder 310 to illustrate its contents. In folder 310, a file "Proof.msi" is the installation package for the English-language localization for the proofing tools, a file "Proof.cab" is the corresponding collection of language-specific files (in a compressed form), and a file "Proof.xml" store meta data for installing the language-specific files for the proofing tools.

Fig. 6 illustrates a general computer environment 400 in which the language-neutral and language-specific installation packages for software setup described herein can be used. The computer environment 400 is only one example of a computing environment and is not intended to suggest any limitation as to the scope of use or functionality of the computer and network architectures. Neither should the computer environment 400 be interpreted as having any dependency or requirement relating to any one or combination of components illustrated in the exemplary computer environment 400.

Computer environment 400 includes a general-purpose computing device in the form of a computer 402. Computer 402 can be, for example, a computer 162 of Fig. 2. The components of computer 402 can include, but are not limited to, one or more processors or processing units 404, a system memory 406, and a system bus 408 that couples various system components including the processor 404 to the system memory 406.

The system bus 408 represents one or more of any of several types of bus structures, including a memory bus or memory controller, a peripheral bus, an accelerated graphics port, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

Computer 402 typically includes a variety of computer readable media. Such media can be any available media that is accessible by computer 402 and includes both volatile and non-volatile media, removable and non-removable media.

The system memory 406 includes computer readable media in the form of volatile memory, such as random access memory (RAM) 410, and/or non-volatile memory, such as read only memory (ROM) 412. A basic input/output system (BIOS) 414, containing the basic routines that help to transfer information between elements within computer 402, such as during start-up, is stored in ROM 412. RAM 410 typically contains data and/or program modules that are immediately accessible to and/or presently operated on by the processing unit 404.

Computer 402 may also include other removable/non-removable, volatile/non-volatile computer storage media. By way of example, Fig. 5 illustrates a hard disk drive 416 for reading from and writing to a non-removable, non-volatile magnetic media (not shown), a magnetic disk drive 418 for reading from and writing to a removable, non-volatile magnetic disk 420 (e.g., a "floppy disk"), and an optical disk drive 422 for reading from and/or writing to a removable, non-volatile optical disk 424 such as a CD-ROM, DVD-ROM, or other optical media. The hard disk drive 416, magnetic disk drive 432, and optical disk drive 422 are each connected to the system bus 408 by one or more data media interfaces 426. Alternatively, the hard disk drive 416, magnetic disk drive 432, and optical disk drive 422 can be connected to the system bus 408 by one or more interfaces (not shown). Additional computer storage media may also be included as part of computer 402, such as a USB flash device coupled to computer 402.

The disk drives and their associated computer readable media provide non-volatile storage of computer readable instructions, data structures, program modules, and other data for computer 402. Although the example illustrates a hard disk 416, a removable magnetic disk 420, and a removable optical disk 424, it is to be appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the exemplary computing system and environment.

Any number of program modules can be stored on the hard disk 416, magnetic disk 420, optical disk 424, ROM 412, and/or RAM 410, including by way of example, an operating system 426, one or more application programs 428, other program modules 430, and program data 432. Each of such operating system 426, one or more application programs 428, other program modules 430, and program data 432 (or some combination thereof) may implement all or part of the resident components that support the distributed file system.

A user can enter commands and information into computer 402 via input devices such as a keyboard 434 and a pointing device 436 (e.g., a "mouse"). Other input devices 438 (not shown specifically) may include a microphone, joystick, game pad, satellite dish, serial port, scanner, and/or the like. These and other input devices are connected to the processing unit 404 via input/output interfaces 440 that are coupled to the system bus 408, but may be connected by other interface and bus structures, such as a parallel port, game port, a universal serial bus (USB), or a Firewire (IEEE 1394) bus.

A monitor 442 or other type of display device can also be connected to the system bus 408 via an interface, such as a video adapter 444. In addition to the monitor 442, other output peripheral devices can include components such as speakers (not shown) and a printer 446 which can be connected to computer 402 via the input/output interfaces 440.

Computer 402 can operate in a networked environment using logical connections to one or more remote computers, such as a remote computing device 448. By way of example, the remote computing device 448 can be a personal computer, portable computer, a server, a router, a network computer, a peer device or other common network node, and the like. The remote computing device 448 is illustrated as a portable computer that can include many or all of the elements and features described herein relative to computer 402.

Logical connections between computer 402 and the remote computer 448 are depicted as a local area network (LAN) 450 and a general wide area network (WAN) 452. Such networking environments are commonplace in offices, enterprise-wide computer networks, intranets, and the Internet.

When implemented in a LAN networking environment, the computer 402 is connected to a local network 450 via a network interface or adapter 454. When implemented in a WAN networking environment, the computer 402 typically includes a modem 456 or other means for establishing communications over the wide network 452. The modem 456, which can be internal or external to computer 402, can be connected to the system bus 408 via the input/output interfaces 440 or other appropriate mechanisms. It is to be appreciated that the illustrated network connections are exemplary and that other means of establishing communication link(s) between the computers 402 and 448 can be employed.

In a networked environment, such as that illustrated with computing environment 400, program modules depicted relative to the computer 402, or portions thereof, may be stored in a remote memory storage device. By way of example, remote application programs 458 reside on a memory device of remote computer 448. For purposes of illustration, application programs and other executable program components such as the operating system are illustrated herein as discrete blocks, although it is recognized that such programs and components reside at various times in different storage components of the computing device 402, and are executed by the data processor(s) of the computer.

Various modules and techniques may be described herein in the general context of computer-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

An implementation of these modules and techniques may be stored on or transmitted across some form of computer readable media. Computer readable media can be any available media that can be accessed by a computer. By way of example, and not limitation, computer readable media may comprise "computer storage media" and "communications media."

"Computer storage media" includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

## Claims

1. A method comprising:
creating, for a program, a first installation package for a first group of files, the first group of files including language-neutral files for the program but no language-specific files for the program; and
creating, for the program, a second installation package for a second group of files, the second group of files including language-specific files for the program.

2. A method as recited in claim 1, further comprising creating, for the program, a plurality of additional installation packages for a plurality of additional groups of files, each of the plurality of additional groups of files including additional language-specific files for the program.

3. A method as recited in claim 2, wherein the files in the second installation package localize the program to one language, and the files in each of the plurality of additional installation packages localize the program to one of a plurality of different languages.

4. A method as recited in claim 1, further comprising storing the first installation package and the second installation package on a single distribution medium.

5. A method as recited in claim 4, further comprising:
creating, for the program, a third installation package for a third group of files, the third group of files including additional localized files for the program that localize the program to a different language than the second group of files; and
storing the third installation package on a second distribution medium.

6. A method as recited in claim 1, wherein creating the first installation package comprises creating the first installation package for a suite of multiple programs that includes the program, the first group of files including language-neutral files for each program in the suite of multiple programs but no language-specific files for any of the programs in the suite of multiple programs.

7. A method as recited in claim 1, wherein none of the second group of files need be localized to the English language.

8. A method as recited in claim 1, wherein creating the first installation package comprises including the first group of files in the first installation package, and creating the second installation package comprises including the second group of files in the second installation package.

9. One or more computer readable media having stored thereon a plurality of instructions that, when executed by one or more processors of a computer, causes the one or more processors to:
associate only language-neutral files for a program with a first installation package;
associate a first collection of language-specific files for the program with a second installation package;
associate a second collection of language-specific files for the program with a third installation package; and
save, on one or more distribution media, the first installation package and one or both of the second installation package and the third installation package.

10. One or more computer readable media as recited in claim 9, wherein the plurality of instructions further cause the one or more processors to:
save the language-neutral files as a first compressed file in a same folder on the one or more distribution media as the first installation package;
save the first collection of language-specific files as a second compressed file in a same folder on the one or more distribution media as the second installation package; and
save the second collection of language-specific files as a third compressed file in a same folder on the one or more distribution media as the third installation package.

11. One or more computer readable media as recited in claim 9, wherein the program is part of a suite of programs, the plurality of instructions further causing the one or more processors to:
associate, for a second program that is part of the suite of programs, only language-neutral files for the second program with a fourth installation package; and
associate, for the second program, a collection of language-specific files for the second program with a fifth installation package.

12. One or more computer readable media as recited in claim 9, wherein the program is part of a suite of multiple programs, the plurality of instructions further causing the one or more processors to associate only the language-neutral files for the program and the language-neutral files for any other of the multiple programs with the first installation package.

13. One or more computer readable media as recited in claim 9, wherein the plurality of instructions further cause the one or more processors to:
include, in the first installation package, the language-neutral files for the program;
include, in the second installation package, the first collection of language-specific files; and
include, in the third installation package, the second collection of language-specific files.

14. A computer readable medium, the computer readable medium having stored thereon:
a collection of language-neutral files, but no language-specific files, for a program;
a first installation package associated with the collection of language-neutral files and generated based at least in part on how the files in the collection of language-neutral files are to be installed on a target computer;
a collection of language-specific files for the program; and
a second installation package associated with the collection of language-specific files and generated based at least in part on how the files in the collection of language-specific files are to be installed on the target computer.

15. A computer readable medium as recited in claim 14, the collection of language-neutral files being stored as a first file on the computer readable medium, and the collection of language-specific files being stored as a second file on the computer readable medium.

16. A computer readable medium as recited in claim 14, wherein the collection of language-neutral files are included in the first installation package.

17. A computer readable medium as recited in claim 14, further comprising:
a plurality of additional collections of language-specific files for the program; and
a plurality of additional installation packages, each associated with one of the plurality of additional collections of language-specific files and generated based at least in part on how the files in the one of the plurality of additional collections of language-specific files are to be installed on the target computer.

18. A computer readable medium as recited in claim 17, wherein each collection of language-specific files localizes the program to a different language.

19. A computer readable medium as recited in claim 14, wherein the program is part of a suite of programs, and further comprising:
a collection of language-neutral files, but no language-specific files, for a second program that is part of the suite of programs;
a third installation package associated with the collection of language-neutral files for the second program and generated based at least in part on how the files in the collection of language-neutral files for the second program are to be installed on the target computer;
a collection of language-specific files for the second program; and
a fourth installation package associated with the collection of language-specific files for the second program and generated based at least in part on how the files in the collection of language-specific files for the second program are to be installed on the target computer.

20. A computer readable medium as recited in claim 14, wherein the collection of language-neutral files is saved as a first compressed file in a same folder on the computer readable medium as the first installation package, and wherein the collection of language-specific files is saved as a second compressed file in a same folder on the computer readable medium as the second installation package.
